(19) Europäisches Patentamt
European Patent Office
Office européen des brevets

(11) **EP 3 245 743 B1**

(12) **EUROPEAN PATENT SPECIFICATION**

(45) Date of publication and mention
of the grant of the patent:
**05.12.2018 Bulletin 2018/49**

(21) Application number: **15714043.5**

(22) Date of filing: **23.02.2015**

(51) Int Cl.:
**H04B 3/52** *(2006.01)*

(86) International application number:
**PCT/SK2015/050004**

(87) International publication number:
**WO 2016/114724 (21.07.2016 Gazette 2016/29)**

(54) **CONNECTION FOR REALIZATION OF THE WAY OF COMMUNICATION IN THE POWER LINE 230V BY MEANS OF MODULATION AND DEMODULATION OF MEAN VALUE OF HALF CYCLE OF SUPPLY VOLTAGE**

VERBINDUNG ZUR AUSFÜHRUNG EINER KOMMUNIKATIONSMETHODE IN DER 230-V-STROMLEITUNG MITTELS MODULATION UND DEMODULATION DES MITTELWERTS DES HALBZYKLUS DER VERSORGUNGSSPANNUNG

CONNEXION POUR LA RÉALISATION DE LA VOIE DE COMMUNICATION DANS LA LIGNE D'ALIMENTATION 230V AU MOYEN DE MODULATION ET DÉMODULATION DE LA VALEUR MOYENNE DU DEMI-CYCLE DE TENSION D'ALIMENTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2015 SK 500042015 U**

(43) Date of publication of application:
**22.11.2017 Bulletin 2017/47**

(73) Proprietor: **SEAK, s.r.o.**
**080 01 Presov (SK)**

(72) Inventor: **Sedlák, Jozef**
**08001 Presov (SK)**

(74) Representative: **Belicka, Ivan**
**Markoffice**
**Svermova 21**
**974 04 Banska Bystrica (SK)**

(56) References cited:
**EP-A1- 2 443 758    WO-A2-01/90828**

## Description

### Technical field

Technical solutions related to the connection for realization of the way of communication in the power line 230V by means of modulation and demodulation of mean value of half cycle of supply voltage to control electrical appliances remote-controlled through line wire, that at the same time serves also as power supply for appliance itself.

### Background of the invention

Current solutions for propagation of signals in the supply network 230V consists in superposition of higher frequencies voltage to supply voltage 230V/50Hz, or amplitude modulation of supply voltage.

Drawback of this solution is that there is need for complicated appliances so on the transmitting end, as on the receiving end. Other drawback is that the system requires line wire for power line with specific properties. All current systems are insufficiently resistant against interference that is present in a supply network.

There is also known solutiomn from PUV 50010-2010 whose subject matter consists in that the demodulator block uses for its function as a reference value, the peak value of the amplitude of half cycle of supply voltage and as an information carrier the peak value of the amplitude of half cycle of supply voltage with opposite polarity, whereby the value of deviation amplitude is measured. WO 01/90828 and EP 2443750 A0 disclose method and apparatuses for amplitude modulation in power line communications.

### Disclosure of the invention

Subject matter of technical solution is in the design of demodulation circuit. Demodulation circuit does not consist of peak detector Fig. 1 as in the case of amplitude modulation, but of circuit with integration segment Fig. 2. Demodulator's circuit with integration segment may be designed as analogous Fig. 3 , or as digital Fig. 4.

Simplest demodulator is integration segment. Integration capacitor is charged through resistor during half cycle of supply voltage. In the time T/2 is voltage on capacity scanned with control circuit and subsequently is the capacitor discharged to assure correct initial conditions and to be able to repeat the process.

For circuit with such solution must apply that the voltage on capacitor must be negligible against amplitude voltage. In this case the current that charges the capacitor is proportional to voltage on the resistor. The size of mean value of half cycle is proportional to charge on the capacitor.

$$Q = C.u$$

As C (capacity) is constant, then the voltage equals to integral of current.

Modulation of mean value is similar to amplitude modulation, but demodulation is carried out essentially only based on evaluation of mean value. We can influence the mean value either by change of maximum level of supply voltage amplitude, or by change of the form of half cycle of supply voltage, whereby the voltage curve and its level on integration capacitor remains unchanged - adequate to mean value.

The connection for realization of the way of communication in the power line 230V by means of modulation and demodulation of mean value of half cycle of supply voltage itself consists of demodulator's block influencing positive half cycle, demodulator's block with integration segment, block of power control unit, appliance's block, whereby the block of power control unit and the appliance's block are interconnected. Modulator's block is connected with the demodulator's block by power line, whereby output voltage amplitude from demodulator's block is unchanged during duration of half cycle, whereby is being limited the form of supply voltage curve by level that is proportional to the information which is being transmitted, and then the demodulator's block with integration segment for detection uses as information carrier the positive half cycle of supply voltage amplitude and as a reference value, negative half cycle of supply voltage amplitude and for transmission of instruction can be used more cycles of supply voltage, whereby for transmission of information is used as synchronization the frequency of line voltage and together with the change of form during modulation is smaller than permissible variation of the form of supply voltage.

In regard of the change of mean value through the change of supply voltage amplitude (amplitude modulation) is very sensitive to noise - in power supply is the amplitude most vulnerable part of the curve. Therefore is used for the change of mean value in modulator the change of the form of supply voltage curve, whereby is the noise on the side of demodulator eliminated to a great extent. Herewith becomes the communication more secure, reliable and suitable for wide usage in the industry.

### Brief description of drawings

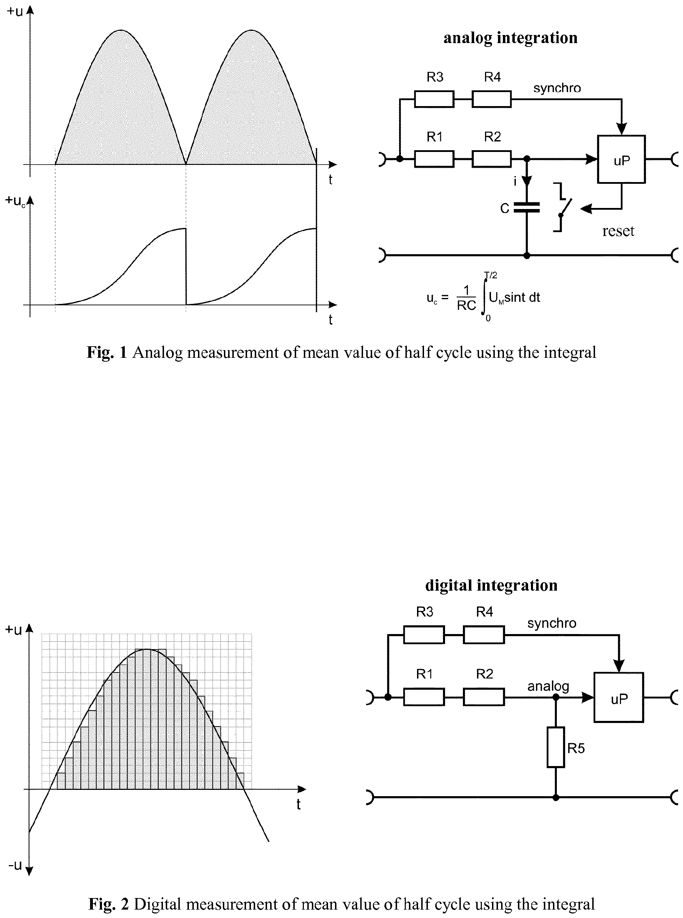

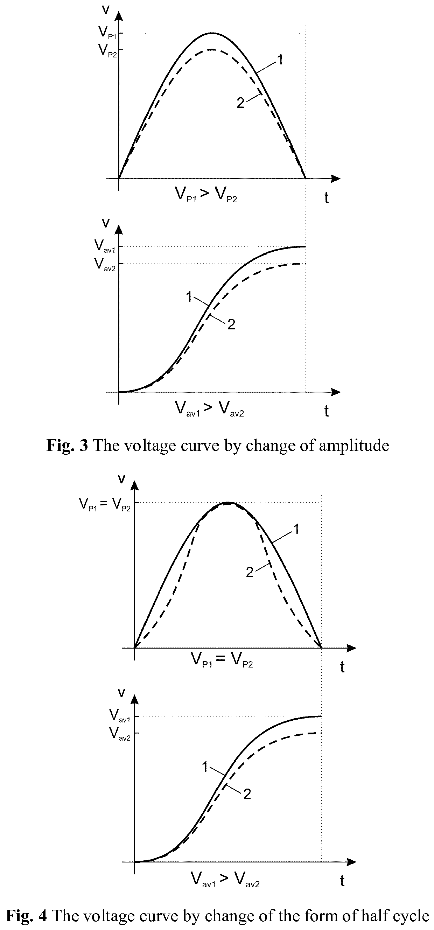

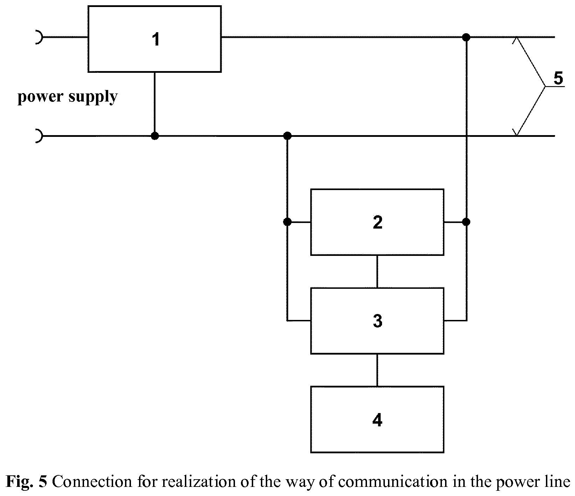

Fig.1 shows analog measurement of mean value of half cycle using the integral; Fig.2 shows digital measurement of mean value of half cycle using the integral; Fig.3 representation of the voltage curve by change of amplitude for comparison with displayed current solution; Fig.4 where is the representation of voltage curve by change of the form of half cycle; Fig. 5 represents the connection for realization of the way of communication in the power line in flowchart.

### Exemplary embodiments

Connection for realization of the way of communication in the power line 230V by means of modulation and demodulation of mean value of half cycle of supply voltage in the Fig. 5 consists of modulator's block 1 influencing positive half cycle, demodulator's block 2 with integration segment, block 3 of power control unit, appliance's block 4, whereby the block 3 of power control unit and the appliance's block 4 are interconnected. Modulator's block 1 is connected with demodulator's block 2 by power line 5. Whereby the output voltage amplitude from modulator's block (1) remains unchanged during duration of half cycle, whereby is being limited the form of supply voltage curve by level that is proportional to the information which is being transmitted, whereby the demodulator's block (2) with integration segment for detection uses as information carrier the positive half cycle of supply voltage amplitude and as a reference value, negative half cycle of supply voltage amplitude and for transmission of instruction can be used more cycles of supply voltage, whereby for transmission of information is used as synchronization the frequency of line voltage and together with the change of form during modulation is smaller than permissible variation of the form of supply voltage. Than the process of evaluation of information consists of two steps, namely demodulation and decoding of demodulated signal.

### Industrial applicability

This way of communication is suitable for usage in operation of appliances without need for installation of additional power line. The way of communication by means of modulation and demodulation of mean value of half cycle enables reliable transmission of control signals and subsequently their decoding. Signals modulated in this way are resistant against perturbing influences that are commonly present in a supply line.

### Claims

1. Connection for realization of communication in a power line 230V by means of modulation and demodulation of a mean value of a half cycle of supply voltage consisting of a modulator's block (1) influencing the positive half cycle, a demodulator's block (2) with an integration segment, a block (3) of power control unit and an appliance's block (4) that are interconnected, wherein the output voltage amplitude from modulator's block (1) is unchanged during duration of the positive half cycle, whereby it is being limited the form of supply voltage curve by a level that is proportional to the information which is being transmitted, whereby the demodulator's block (2) with integration segment for detection uses as information carrier the positive half cycle of the supply voltage amplitude and as a reference value, the negative half cycle of the supply voltage amplitude and for transmission of instruction more cycles of the supply voltage can be used, whereby for transmission of information it is used as synchronization the frequency of line voltage.

### Patentansprüche

1. Schaltung zur Durchführung der Kommunikationsweise in der Leistungsleitung 230V mithilfe der Modulation und Demodulation des Mittelwertes der Halbperiode der Versorgungsspannung, bestehend aus dem Block (1) des die positive Halbperiode beeinflussenden Modulators, dem Block (2) des Demodulators mit einem Integrationselement, dem Block (3) der Leistungssteuereinheit, dem Block (4) des Verbrauchsgeräts, miteinander verkoppelt, **dadurch gekennzeichnet, dass** die Amplitude der Ausgangsspannung aus dem Block (1) des Modulators während der Dauer der Halbperiode unveränderlich ist, wobei die Form des Versorgungsspannungsverlaufs um die Ebene beschränkt wird, die der zu übertragenden Information proportional ist, wobei der Block (2) des Demodulators mit dem Integrationselement zur Detektion die positive Halbperiode der Amplitude der Versorgungsspannung als Informationsträger und als Referenzwert die negative Halbperiode der Amplitude der Versorgungsspannung verwendet, und zur Instruktionsübertragung können mehrere Perioden der Versorgungsspannung verwendet werden, wobei zur Informationsübertragung die Frequenz der Netzspannung als Synchronisation verwendet wird

### Revendications

1. La connexion pour réaliser le mode de communication dans la conduite de puissance 230V par modulation et démodulation de la valeur médiane de la demi-période de la tension d'alimentation comprenant un bloc (1) du modulateur traitant la demi-période positive, un bloc (2) du démodulateur comprenant un article d'intégration, un bloc (3) de l'unité de commande de puissance, un bloc (4) de l'appareil, les blocs étant interconnectés, **caractérisée par le fait que** l'amplitude de la tension de sortie du bloc (1) du modulateur est inaltérable durant la demi-période, étant donné que la forme du procès de la tension d'alimentation est réduite d'un niveau proportionnel à l'information transmise, le bloc (2) du démodulateur comprenant l'article d'intégration pour détection comme le support de l'information, il utilise la demi-période positive de l'amplitude de la tension d'alimentation et pour la valeur référentielle, il utilise la demi-période négative de l'amplitude de la tension d'alimentation et pour transmettre l'instruction, plusieurs périodes de la tension d'alimentation peuvent être utilisées, étant donné que pour la transmission de l'information, la fréquence de la tension de réseau est utilisée pour la synchronisation.

**analog integration**

$$u_c = \frac{1}{RC} \int_0^{T/2} U_M \sin t \, dt$$

**Fig. 1** Analog measurement of mean value of half cycle using the integral

**digital integration**

**Fig. 2** Digital measurement of mean value of half cycle using the integral

5

**Fig. 3** The voltage curve by change of amplitude

**Fig. 4** The voltage curve by change of the form of half cycle

**Fig. 5** Connection for realization of the way of communication in the power line

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0190828 A
- EP 2443750 A0